Europäisches Patentamt

European Patent Office

Office européen des brevets

(11) Numéro de publication: **0 152 352**
**A2**

# (12) DEMANDE DE BREVET EUROPEEN

(21) Numéro de dépôt: 85400205.2

(22) Date de dépôt: 07.02.85

(51) Int. Cl.⁴: **C 09 D 7/12**
**C 09 D 9/00**

(30) Priorité: 09.02.84 FR 8402009

(43) Date de publication de la demande:
21.08.85 Bulletin 85/34

(84) Etats contractants désignés:
AT BE CH DE FR GB IT LI LU NL SE

(71) Demandeur: Salkin, André
134 avenue du 14 juillet
F-76300 Sotteville les Rouen(FR)

(72) Inventeur: Salkin, André
134 avenue du 14 juillet
F-76300 Sotteville les Rouen(FR)

(74) Mandataire: Derambure, Christian
Cabinet BUGNION ASSOCIES SARL 116, boulevard
Haussmann
F-75008 Paris(FR)

(54) Revêtement de protection temporaire et solution de déprotection qui en association avec le revêtement contient des agents de biodégradation.

(57) L'invention concerne des revêtements temporaires.

Un revêtement de protection temporaire obtenu par application d'au moins un vernis solubilisable pour une solution de déprotection est caractérisé par le fait que le mélange du vernis et de la solution de déprotection contient des microorganismes, ou leurs produits naturellement secrétés, ou des produits biologiques, dont la fonction est de dégrader au moins un constituant du mélange du vernis et de la solution de déprotection, au moment de la déprotection. Le revêtement peut par exemple être obtenu par séchage d'une solution d'au moins un copolymère acrylique et/ou méthacrylique acidifiée, aminée ou basique et contenir un enzyme, par exemple un lipase et/ou une protéase.

Application dans l'industrie automobile notamment.

Revêtement de protection temporaire et solution de déprotection qui en association avec le revêtement contient des agents de biodégradation.

L'invention concerne un revêtement de protection temporaire obtenu par séchage d'un vernis, et pouvant être dissous par une solution de déprotection, l'association de la solution de déprotection et du vernis dissous contenant des micro-organismes.

On connait des systèmes de protection et revêtements temporaires à base de composés chimiques qui sont utilisés afin de préserver des pièces industrielles ou des produits chimiques d'une dégradation au cours du stockage.

On connait en particulier des copolymères d'acide acrylique qui sont utilisés sous forme de vernis et qui sont dissous au moment de la déprotection par des solutions aqueuses aminées ou basiques.

On connait aussi des vernis constitués de solutions copolymères acryliques quaternisés dont on a fait volatiliser le solvant, plus particulièrement l'eau par séchage.

Ces vernis sont enlevés à l'aide d'une solution de déprotection acide.

Enfin, on connait des vernis obtenus par séchage de solutions de copolymère vinyle-acrylique acide. De tels vernis
sont dissous par une solution aminée.

Par solution de "déprotection", on entend dans la présente
description et dans les revendications une solution qui
lorsqu'elle est appliquée sur le revêtement de protection
le dissout plus ou moins totalement et permet ainsi l'enlèvement de ce revêtement déposé sur une surface à protéger.

Cependant, les revêtements de protection temporaires de
la technique antérieure, lorsqu'ils sont éliminés par une
solution de déprotection, constituent des facteurs de
pollution des eaux de rinçage et des eaux résiduaires
d'écoulement.

De plus, la déprotection par dissolution du film de protection doit encore être améliorée.

A cet effet, la présente invention a le quadruple objectif
suivant :
- En premier lieu, on désire améliorer la déprotection
  du revêtement.
- En second lieu, on souhaite biodégrader en partie ou en
  totalité le vernis de protection au moment de son enlèvement.
- En troisième lieu, on désire biodégrader en partie ou
  totalement les éléments composants le vernis ou film de
  protection, et biodégrader la solution formée par le
  revêtement en présence de la solution de déprotection,
  ainsi que des eaux de rinçage et des eaux résiduaires
  d'écoulement.
- En quatrième lieu, on désire biodégrader en partie ou
  en totalité les éléments composant les effluents polluants du milieu professionnel concerné, ceci au moment
  de l'écoulement du produit dans les eaux résiduaires.

A cet effet, l'invention concerne un revêtement de protection temporaire obtenu par séchage d'un vernis solubilisable par une solution de déprotection. Le vernis peut être par exemple un copolymère acrylique et/ou méthacrylique acidifié, aminé ou basique, ledit revêtement étant solubilisé par une solution de déprotection aqueuse, aminée et/ou basique lorsque la solution de vernis est acidifiée ou par une solution de déprotection aqueuse acide lorsque la solution de vernis est aminée ou basique. Selon l'invention, le mélange du vernis et de la solution de déprotection contient des micro-organismes ou leur produit naturellement secrétés, ou des produits biologiques dont la fonction est de biodégrader au moins un constituant du mélange liquide formé par le vernis et la solution de déprotection.

Selon un mode de réalisation de l'invention, les micro-organismes sont introduits directement dans le vernis de protection. Dans le cas de vernis à base d'acryliques, ils sont alors, lorsque le solvant du vernis s'est volatilisé, inclus dans la structure bi-dimensionnelle de copolymère acrylique et/ou méthacrylique. On préfère choisir des micro-organismes aérobies, à savoir ne se développant pas en l'absence d'air ou d'oxygène. On préfère par ailleurs des micro-organismes qui sont inactifs lorsque le vernis n'est pas en solution dans un solvant.

Selon un autre mode de réalisation, on introduit les micro-organismes ou les produits naturellement secrétés par ceux-ci dans la solution de déprotection. Les micro-organismes agissent alors lorsque la solution de déprotection est projetée directement sur le revêtement de protection temporaire.

L'invention concerne aussi un revêtement de protection temporaire obtenu par séchage d'un vernis caractérisé par le fait que le vernis de protection temporaire contient des micro-organismes dont la fonction est d'apporter au milieu effluent une amélioration de la dégradation des produits organiques et minéraux pouvant être contenus dans les effluents du milieu environnant.

Les micro-organismes contenus dans la solution aqueuse peuvent être obtenus et sélectionnés de la manière suivante :

On recueille un effluent dans lequel on souhaite rejeter le vernis après déprotection. On le met ensuite en macération à température donnée. Les micro-organismes existant à l'état latent dans l'effluent se développent sous l'action de la macération.

Puis, on effectue l'analyse des bactéries et/ou enzymes qui sont actifs dans le milieu naturel macéré. Préférentiellement, on ajoute des additifs synergiques qui sont par exemple des milieux biologiques et qui permettent l'accélération de la dégradation des composés chimiques de l'effluent contenant le vernis après déprotection.

On cultive, ensuite, les germes recueillis et on les réintroduit dans le vernis sous forme inactive.

Selon un mode de réalisation de l'invention, les germes sont rendus inactifs en les introduisant dans des micro-capsules constitués par exemple d'une coque en polyvinyl-pyrrolidone et/ou en présence d'inhibiteurs, à savoir des inhibiteurs de croissance et d'activité des germes. Lorsqu'on rejette le vernis et la solution de déprotection dans l'effluent, la coque et/ou les inhibiteurs sont rendus inactifs puisqu'ils sont séparés des germes ou détruits.

L'invention concerne donc un revêtement de protection temporaire obtenu par séchage d'un vernis caractérisé par le fait que la solution formant le vernis contient des micro-organismes ou leur produit naturel de sécrétion, ou des catalyseurs biologiques.

Le revêtement peut, selon un mode de réalisation préférentiel de l'invention, être obtenu par séchage d'une solution d'au moins un copolymère et/ou méthacrylique, en association avec l'acide acrylique et/ou l'acide méthacrylique.

Enfin, le revêtement selon l'invention peut aussi être obtenu par séchage d'une solution d'au moins un copolymère acrylique ayant dans ses chaînes des groupements aminés.

On peut choisir aussi des catalyseurs d'origine biologique tels que les enzymes pour les introduire soit dans le vernis pour revêtement, soit dans la solution de déprotection. Par exemple, selon un mode de réalisation préféré de l'invention, on introduit une lipase.

Les micro-organismes ou agents de sécrétion ou agents biologiques seront choisis parmi ceux qui sont capables d'être stables et bloqués dans le milieu du vernis lorsqu'ils forment l'agent de protection, et capables de dégrader l'un ou plusieurs des composés du vernis lors de sa déprotection et/ou capables de dégrader les éléments en partie ou en totalité de la solution de déprotection.

Par ailleurs, les micro-organismes ou agents de sécrétion ou agents biologiques peuvent être choisis de façon à être stables dans la solution de déprotection et de dégrader tout ou partie des composés du vernis de protection, au moment de la déprotection et/ou après la déprotection dans les eaux résiduaires.

La description, en regard des exemples annexés à titre non limitatif, permettra de comprendre comment l'invention peut être mise en pratique.

Exemple 1

Cet exemple illustre un vernis de protection et une solution de déprotection ne faisant pas partie de la présente invention est mentionné à titre comparatif.

Vernis de protection 1a

| Diluant essence D | 460 | g |
|---|---|---|
| Méthacrylate de méthyle | 93,5 | g |
| Acide méthacrylique | 0,5 | g |
| Corps gras | 0,05 | g |
| TOTAL | 554,05 | g |

Solution de déprotection 1b

| Eau | 96,2 | g |
|---|---|---|
| KaOH | 1,3 | g |
| Agent tensio-actif | 1,0 | g |
| Métasilicate | 0,5 | g |
| Corps gras | 1,0 | g |

A - Préparation du milieu biologique qui sera introduit dans les exemples suivants :

- On obtient les microorganismes destinés à être intro- dans une solution de protection et de déprotection de la manière suivante :

- On effectue un prélèvement dans un effluent correspondant au milieu que l'on souhaite traiter, par exemple un effluent d'un garage,

- On introduit ce prélèvement dans un macérateur, de manière à obtenir un milieu biologique correspondant à celui que l'on souhaite obtenir pour les dégradations à venir,

- On effectue une macération à une température de 20°C à 30°C, pendant 300 heures,

- On filtre, et si on le souhaite, on liophilise les particules contenant les microorganismes et leur sécrétion.

Une fois séchées, ces particules sont enrobées dans de la polivinyle pyrrolidone.

On peut y introduire après une protéase, une alkylase et une lipase, se transformant en une poudre légère et pulvérulente qui est introduite dans les vernis ou les produits de déprotection avec des inhibiteurs de développement bactérien connus, de telle manière que les milieux de microorganismes ne se développent pas pendant que l'on applique le vernis.

Exemple 2

Cet exemple est mentionné à titre illustratif.

Vernis de protection 2a

| Acrylate d'éthyle | 39 | g |
|---|---|---|
| Méthacrylate de méthyle | 22 | g |
| Monométhacrylate d'éthylglycol | 16 | g |
| Méthacrylate de diméthyl-amino-éthyle | 22 | g |
| Mélange éthanol/méthanol | 50 | g |
| Eau | 51 | g |

(neutralisée, quaternisée)

Solution de déprotection 2b
La solution de déprotection comprend :

| Acide acétique | 10 | g |
|---|---|---|
| Corps gras | 0,5 | g |
| Tensioactif | 1,0 | g |
| Eau | 88,5 | g |

Exemple 3

Dans le vernis mentionné dans l'exemple 1, on ajoute
0,05 gramme d'un milieu biologique sélectionné.

Exemple 4

Dans le vernis mentionné dans l'exemple 2, on introduit
un milieu biologique sélectionné,         à savoir on
ajoute 0,10 gramme.

Exemple 5

Il s'agit d'une solution de déprotection contenant un
milieu biologique selon l'invention.

Cette solution de déprotection comprend :

| | | |
|---|---|---|
| Eau | 96,2 | g |
| KaOH | 1,3 | g |
| Tensioactif | 1,0 | g |
| Métasilicate | 0,5 | g |
| Corps gras | 1,0 | g |
| Milieu biologique sélectionné | 0,05 | g |

Exemple 6

Il s'agit d'une solution de déprotection selon l'invention. Elle contient :

| | | |
|---|---|---|
| Acide acétique | 10 | g |
| Eau | 87,5 | g |
| Corps gras | 0,5 | g |
| Tensioactif | 1,0 | g |
| Milieu biologique sélectionné | 1,0 | g |

A l'aide des vernis mentionnés ci-dessus, on revêt des surfaces métalliques avec 50 grammes de vernis. On revêt ainsi deux plaques pour chacun des vernis que l'on sèche à l'air. Après une semaine de stockage, on procède à la déprotection et au rinçage de la manière suivante :

On utilise 50 grammes d'une solution de déprotection pour une plaque revêtue de chaque vernis et 6000 grammes d'eau de rinçage.

On récupère les liquides dans des bacs distincts. On s'assure que tout le revêtement a bien été dissous et on évacue tous les liquides dans des bacs d'évacuation.

On déprotège le vernis de l'exemple 1a avec la solution de l'Exemple 1b, le vernis de l'exemple 2a avec la solution de l'exemple 2b, le vernis de l'exemple 3 avec la solution de l'exemple 2a et le vernis de l'exemple 4 avec la solution de l'exemple 2b. Par ailleurs, on effectue la déprotection du vernis de l'exemple 1 avec la solution de déprotection de l'exemple 5, le vernis de l'exemple 3 avec la solution de déprotection de l'exemple 5. Enfin, on effectue la déprotection du vernis de l'exemple 2 avec la solution de l'exemple 6 et le vernis de l'exemple 4 avec la solution de l'exemple 6.

On laisse reposer les solutions résiduaires dans des bacs de récupération respectifs pendant 24 heures. Ces bacs sont couverts et on récupère 6 100 grammes de solution par bac.

On remarque qu'au cours de la déprotection, celle-ci était complète à 100 % mais qu'avec les vernis contenant des milieux biologiques sélectionnés ou avec les solutions de déprotection contenant les milieux biologiques sélectionnés, la réaction de déprotection est plus rapide.

Après 240 heures, on procède à une DCO (oxydation) selon les normes AFNOR. On obtient les résultats suivants en milligrammes/litres d'oxygène nécessaire à l'oxydation des résidus :

Vernis n° 1a,  solution n° 1b DCO supérieure à 31.200
Vernis n° 2a,  solution n° 2b DCO supérieure à 31.200
Vernis n° 3,   solution n° 1b DCO inférieure à 19.800
Vernis n° 4,   solution n° 2b DCO inférieure à 19.800
Vernis n° 1,   solution n° 5  DCO inférieure à 19.800
Vernis n° 3,   solution n° 5  DCO inférieure à 19.800
Vernis n° 2,   solution n° 6  DCO inférieure à 19.800
Vernis n° 4,   solution n° 6  DCO inférieure à 19.800

Par conséquent, la DCO avec des vernis ou des solutions
contenant des lipases est presque inférieure de moitié
à la DCO des vernis et des solutions ne contenant pas
de milieux biologiques sélectionnés.

REVENDICATIONS

1.    Revêtement de protection temporaire obtenu par application d'au moins un vernis solubilisable pour une solution de déprotection, caractérisé par le fait que le mélange du vernis et de la solution de déprotection contient des micro-organismes, et/ou leurs produits naturellement secrétés, et/ou des produits biologiques, dont la fonction est de dégrader au moins un constituant du mélange du vernis et de la solution de déprotection, au moment de la déprotection.

2.    Revêtement selon la revendication 1, caractérisé par le fait que le vernis contient des micro-organismes, ou leurs produits naturellement secrétés ou des produits biologiques, dont la fonction est de dégrader au moins un constituant du mélange du vernis et de la solution de déprotection, au moment de la déprotection.

3.    Revêtement de protection temporaire selon la revendication 1, obtenu par séchage d'une solution d'au moins un copolymère acrylique et/ou méthacrylique acidifiée, aminée ou basique, caractérisé par le fait que la solution formant le vernis contient des micro-organismes et/ou leur produit naturel de sécrétion, et/ou des produits catalyseurs biologiques.

4.    Revêtement selon l'une quelconque des revendications 1 et 2, caractérisé par le fait qu'il est obtenu par séchage d'une solution d'au moins un copolymère acrylique et/ou méthacrylique en association avec l'acide acrylique et/ou l'acide méthacrylique.

5.        Revêtement selon l'une quelconque des revendications 1 à 4, caractérisé par le fait que la solution de vernis contient des micro-organismes et/ou leur produit naturel de sécrétion et/ou des produits catalyseurs biologiques dont la fonction est d'apporter au milieu effluent une amélioration de la dégradation des produits naturels organiques et minéraux pouvant être contenus dans l'effluent.

6.        Revêtement selon l'une quelconque des revendications 1 à 5, caractérisé par le fait qu'il est obtenu par séchage d'une solution d'au moins un copolymère acrylique ayant dans leur chaîne des groupements aminés.

7.        Revêtement selon l'une quelconque des revendications 1 à 6, caractérisé par le fait qu'il contient un milieu biologique sélectionné.

8.        Revêtement selon l'une quelconque des revendications 1 à 7, caractérisé par le fait qu'il est obtenu par séchage d'une solution contenant :
- Diluant essence D                          460      g
- Méthacrylate de méthyle butyle             93       g
- Acide méthacrylique                        0,5      g
- Corps gras                                 0,05     g
- Milieu biologique sélectionné             0,05     g

9.        Revêtement selon l'une quelconque des revendications 1 à 8, caractérisé par le fait qu'il est obtenu par séchage d'une solution contenant :

| | | |
|---|---|---|
| - Acrylate d'éthyle | 39 | g |
| - Méthacrylate de méthyle | 22 | g |
| - Monométhacrylate d'éthylglycol | 16 | g |
| - Méthacrylate de diméthyl-amino-éthyle | 22 | g |
| - Milieu biologique sélectionné | 0,10 | g |
| - Ethanol/méthanol | 49,95 | g |
| - Eau | 50 | g |

( neutralisée et quaternisée )

10.    Solution de déprotection d'un revêtement selon l'une quelconque des revendications 1 à 9, caractérisée par le fait qu'elle contient des micro-organismes ou les produits naturels de sécrétion de ceux-ci ou des catalyseurs biologiques.

11.    Solution de déprotection selon la revendication 10, caractérisée par le fait qu'elle contient :

| | | |
|---|---|---|
| - KaOH | 1,3 | g |
| - Tensioactif | 1,0 | g |
| - Métasilicate | 0,5 | g |
| - Corps gras | 1,0 | g |
| - Milieu biologique sélectionné | 0,05 | g |
| - Eau | 96,2 | g |

12.    Solution de déprotection selon la revendication 10, caractérisée par le fait qu'elle contient :

| | | |
|---|---|---|
| - Acide acétique | 10 | g |
| - Corps gras | 0,5 | g |
| - Tensioactif | 1,0 | g |
| - Milieu biologique sélectionné | 1,0 | g |
| - Eau | 87,5 | g |

0152352

13.    Procédé de préparation d'un revêtement selon l'une quelconque des revendications 1 à 9, caractérisé par le fait qu'on prépare un vernis et qu'on lui ajoute un milieu biologique sélectionné contenant des micro-organismes et/ou leurs produits naturellement secrétés et/ou des produits biologiques sous forme inactive, ce dit milieu biologique sélectionné étant obtenu :

- En recueillant un effluent,
- En mettant cet effluent en macération, à température donnée,
- En effectuant l'analyse des microorganismes et/ou leurs produits de sécrétion et/ou les produits biologiques de l'effluent,
- En recueillant ces micro-organismes et/ou leurs produits de sécrétion et/ou les produits biologiques.

14.    Procédé selon la revendication 13, caractérisé par le fait qu'on rend inactifs les microorganismes, et/ou leurs produits de sécrétion et/ou les produits biologiques en lui introduisant dans des micro-capsules.

15.    Procédé selon la revendication 13, caractérisé par le fait qu'on rend inactifs les microorganismes, et/ou leurs produits de sécrétion et/ou les produits biologiques en ajoutant des inhibiteurs de croissance et d'activité.